(19) Europäisches Patentamt
European Patent Office
Office européen des brevets

(11) **EP 2 872 238 B1**

(12) **FASCICULE DE BREVET EUROPEEN**

(45) Date de publication et mention de la délivrance du brevet:
**13.06.2018  Bulletin 2018/24**

(21) Numéro de dépôt: **13733000.7**

(22) Date de dépôt: **04.07.2013**

(51) Int Cl.:
**B01D 53/26** (2006.01)          **B01D 53/28** (2006.01)
**C10G 33/04** (2006.01)

(86) Numéro de dépôt international:
**PCT/EP2013/064119**

(87) Numéro de publication internationale:
**WO 2014/009239 (16.01.2014 Gazette 2014/03)**

(54) **PROCÉDÉ DE DÉMARRAGE D'UN PROCÉDÉ DE DESHYDRATATION UTILISANT DES PRODUITS DELIQUESCENTS**

VERFAHREN ZUM ANFAHREN EINES DEHYDRIERUNGSPROZESSES AUF BASIS DELIQUESZENTER PRODUKTE

METHOD FOR START-UP FOR A DEHYDRATION PROCESS USING DELIQUESCENT PRODUCTS

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité:  **13.07.2012  EP 12358004**

(43) Date de publication de la demande:
**20.05.2015  Bulletin 2015/21**

(73) Titulaire: **QUADRIMEX CHEMICAL**
**84300 Cavaillon (FR)**

(72) Inventeurs:
• **VASSIEU, Maxime**
**F-84140 Montfavet (FR)**
• **CHINH, Jean-Claude**
**F-13920 St Mitre Les Remparts (FR)**

(74) Mandataire: **De Kezel, Eric et al**
**Mathisen & Macara LLP**
**Communications House**
**South Street**
**Staines-upon-Thames**
**Middlesex, TW18 4PR (GB)**

(56) Documents cités:
EP-A2- 0 171 578      WO-A1-2012/010754
US-A- 3 246 453

• AUGIER F ET AL: "Liquid Drying by Solid Desiccant Materials: Experimental Study and Design Method", OIL & GAS SCIENCE AND TECHNOLOGY - REVUE DE L'INSTITUT FRANCAISDU PETROLE, EDITIONS TECHNIP, PARIS, FR, vol. 63, 1 novembre 2008 (2008-11-01), pages 713-722, XP009145165, ISSN: 0020-2274, DOI: 10.2516/OGST:2008030 cité dans la demande
• BARNETT J W: "NEW SALT PRODUCT DRIES DISTILLATE STREAMS, ELIMINATES HAZE", OIL AND GAS JOURNAL, PENNWELL, HOUSTON, TX, US, vol. 94, no. 16, 15 avril 1996 (1996-04-15), pages 68-70, XP000595914, ISSN: 0030-1388

**Description**

La présente invention concerne un procédé et une installation pour la déshydratation ou le séchage de liquides et/ou de gaz à l'aide d'agents déshydratants déliquescents. En particulier, la présente invention permet de réduire la consommation en agents déshydratants déliquescents tout en améliorant les performances de déshydratation du dit procédé et de son installation.

Cela fait des décennies que la technologie de séchage au moyen d'agents déshydratants déliquescents est utilisée dans l'industrie. Récemment, des producteurs d'agents déshydratants déliquescents ont apporté certaines améliorations aux agents et au procédé utilisant les dits agents. On connaît en particulier le document "Liquid Drying by Solid Desiccant Materials: Expérimental Study and Design Method", F. Augier, C. Boyer and M. Vassieu, O & Gas Science and Technology - Rev. IFP, Vol. 63 (2008), No. 6, pp. 713-722, qui décrit le séchage par produits déliquescents. US3246453 décrit un sécheur pour air comprimé à base de matériau déliquescent; dans une configuration particulière représentée dans sa figure 11, US3246453 décrit l'utilisation d'une couche de support (pour le matériau déliquescent) constituée de sphères en plastiques dont les dimensions sont de 2 pouces de diamètre pour un sécheur faisant plus de 8 pouces de diamètre ; cette couche de support sert à mieux disperser l'air comprimé. Barnett J W in Oil and Gas Journal, Penwell, Houston, TX, US, Vol. 94, no. 16, 15 avril 1996, pages 68-70, décrit une nouvelle formulation de chlorure de calcium en poudre pour le séchage de distillats provenant de raffineries commerciales ; il décrit également l'utilisation d'une multi-couche de support de la poudre de sel comportant deux types de graviers surmontés par du sable. EP171578 concerne un procédé de traitement de combustible nucléaire permettant d'en extraire des métaux lourds.

Grâce à d'importants moyens technologiques incluant des unités pilotes et des techniques de modélisation, la Demanderesse a découvert de manière inattendue qu'il était encore possible d'améliorer la performance de son procédé de séchage tout en réduisant la consommation en matière première, à savoir la consommation en agents déshydratants déliquescents. Ces avantages ainsi que les caractéristiques de la présente invention sont décrits ci-après.

L'invention sera mieux comprise et ses avantages apparaîtront plus clairement à la lecture de la description qui suit d'exemples de réalisation, nullement limitatifs, illustrés par les figures ci-après annexées, parmi lesquelles:

- la figure 1 schématise l'appareillage et le principe de l'invention,

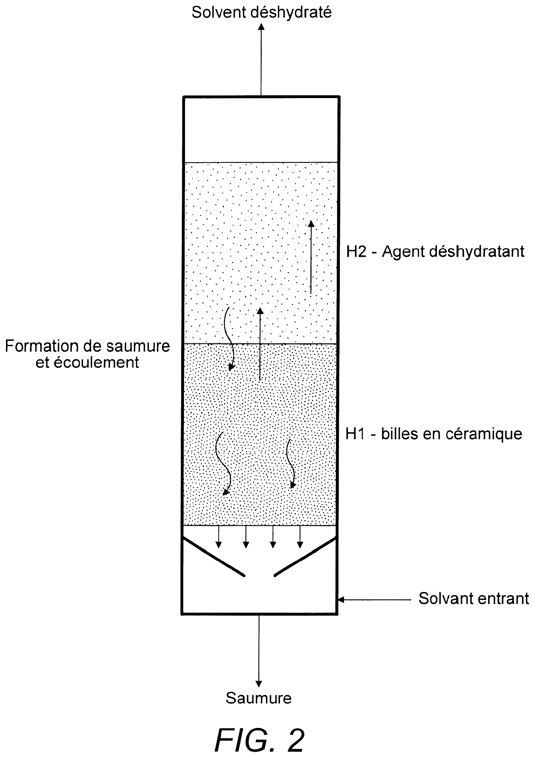

- la figure 2 montre le principe général d'un procédé similaire selon l'art antérieur de F. Augier de 2008 identifié ci-dessus,
- la figure 3 illustre la morphologie des coussinets des agents déliquescents,
- la figure 7 illustre les valeurs préférentielles maximales des rapports de hauteur entre le lit inerte et le lit d'agents déliquescents selon la présente invention,
- la figure 8 illustre les valeurs préférentielles minimales des rapports de hauteur entre le lit inerte et le lit d'agents déliquescents selon la présente invention,
- la figure 9 illustre les gammes de valeurs préférentielles des rapports de hauteur entre le lit inerte et le lit d'agents déliquescents selon la présente invention.

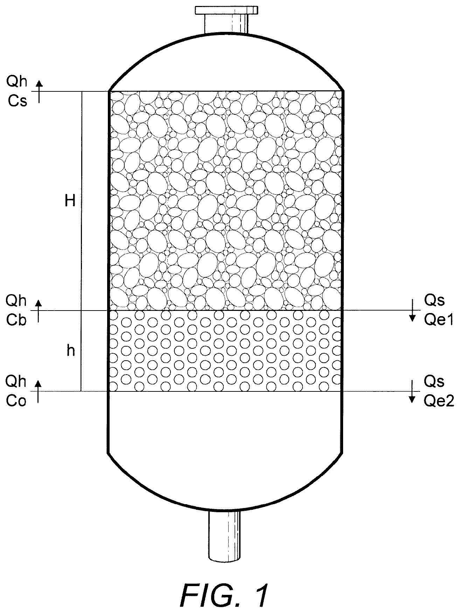

La figure 1 montre le principe général d'un procédé dans lequel l'effluent à sécher entre dans la colonne par un conduit latéral (non représenté) dans la colonne de séchage. La colonne comprend une grille de support du lit de séchage, lit qui est constitué pour sa partie inférieure d'un lit d'inerte surmonté par le lit d'agents déliquescents. En contact avec les agents déshydratants déliquescents, le produit à traiter se déshydrate en formant une saumure s'écoulant en fond de la colonne de séchage. Lorsque la saumure traverse le lit d'inerte, elle possède encore un pouvoir déshydratant non négligeable; un des objectifs de la présente invention consiste en l'optimisation de l'utilisation du pouvoir déshydratant de la dite saumure présente dans la couche d'inerte. L'effluent déshydraté sort par un conduit en tête de la colonne et la saumure est récupérée en fonds de colonne.

Une description plus détaillée de la figure 1 et des paramètres physiques qui s'y réfèrent permettra de mieux illustrer la présente invention :

Qh : représente le débit du gaz/liquide introduit dans le procédé de déshydratation en kg/hr
Qs : représente le débit d'agent déliquescent qui passe au travers du lit d'inerte en kg/hr
Qe : représente le débit d'eau qui passe au travers du lit d'inerte en kg/hr
C : représente la concentration en eau (en % en poids par rapport au poids total) dans le gaz/liquide (o : initiale ; b : après le lit d'inerte ; s : finale)
h : représente la hauteur du lit d'inerte
H : représente la hauteur du lit d'agents déliquescents
S : représente la concentration en sel (en % en poids par rapport au poids total) de la saumure
K : représente le coefficient de transfert

A : représente une surface spécifique (Ab : des matériaux, inertes ; Ac : des agents déliquescents)

u : représente la vitesse en fut vide (m/s) du gaz/liquide ; cette vitesse en fut vide correspond au débit du gaz/liquide divisé par la section de la colonne.

La Demanderesse est parvenue en étudiant l'ensemble des paramètres susmentionnés à identifier parmi ces paramètres ceux qui avaient une influence prépondérante sur l'optimisation du procédé selon la présente invention. De plus, la Demanderesse est parvenue à définir grâce à cette étude des gammes particulières opératoires pouvant être facilement mises en oeuvre par l'homme de l'art.

Ainsi, la présente invention concerne un procédé de démarrage d'un procédé de déshydratation d'un effluent liquide et/ou gazeux, le dit effluent étant sélectionné parmi les GPL, essence, gasoil, kérosène, solvants (par exemple THF, le DCM ou la TEA), et les gaz naturels (propane, butane, GNL), qui est introduit à contre-gravité au travers d'une colonne de séchage comprenant un lit de séchage de hauteur initiale (H+h) constitué dans sa partie inférieure d'un lit de matériau inerte de hauteur h et dans sa partie supérieure d'un lit d'agents déshydratants déliquescents de hauteur initiale H, les dits agents déshydratants déliquescents ayant un poids initial compris entre 3 et 40g et étant choisis parmi le chlorure de calcium ($CaCl_2$), la soude (NaOH) et/ou la potasse (KOH), caractérisé en ce que le rapport h/H est inférieur à 0,49 et supérieur ou égal à 0,01 ; et en ce que la surface spécifique du lit de matériau d'inerte par mètre cube de lit est comprise entre 250 et 650 $m^2/m^3$.

Le matériau inerte utilisé pour la partie inférieure du lit de séchage peut être choisi parmi une vaste gamme de produits inertes appropriés. On préfèrera bien entendu des matériaux chimiquement inertes et compatibles avec le degré de corrosion induit par le milieu réactionnel. A titre d'exemple, on citera les matériaux céramiques, de préférence des céramiques techniques tels que des oxydes (par exemple l'oxyde d'aluminium ou l'oxyde de zirconium), des non-oxydes (comme par exemple les carbures, borures, nitrures, céramiques composées de silicium et d'atomes tels que tungstène, magnésium, platine, ou encore titane) et/ou des céramiques composites (combinaison des oxydes et des non-oxydes).

Bien que la forme du matériau inerte ne soit pas critique, on préfère utiliser des formes sphéroïdales. Toutefois, d'autres formes telles des anneaux et/ou des selles peuvent également être utilisées.

Dans un mode d'exécution particulier de la présente invention, le matériau inerte est sélectionné parmi des billes de diamètre compris entre 5 et 30 mm.

L'aire spécifique (« Ab ») du lit de matériau d'inerte par mètre cube de lit est comprise entre 250 et 650 m2/m3. Bien que l'on puisse en théorie préconiser l'utilisation de matériau inerte caractérisé par une aire spécifique infinie, une limitation intrinsèque de tailles minimales du produit inerte sera rapidement identifiée par l'homme de l'art en fonction par exemple de la taille des trous de la grille supportant le lit et/ou du calcul des pertes de charge lié au procédé utilisé. Ainsi, on préfère généralement se limiter à l'utilisation de matériau inerte présentant une aire spécifique comprise entre 250 et 650 m2/m3 (Ab).

Comme démontré dans les tableaux ci-après, la hauteur du lit initial d'agents déliquescents et la taille du matériau inerte ont un impact considérable sur la hauteur optimale du lit de matériau inerte.

Ainsi, dans un mode préféré d'exécution de la présente invention, le rapport h/H est inférieur ou égal aux valeurs indiquées dans le tableau 1 ci-dessous en fonction de la surface spécifique et du type de matériau inerte. Il sera ensuite très facile pour l'homme de l'art de définir des valeurs optimales maximales de h/H grâce à ce tableau.

Par exemple, pour un matériau inerte de surface spécifique de 500 m2/m3 (Ab), on effectue une règle de trois autour des valeurs les plus proches, à savoir celles correspondant respectivement à 367 m2/m3 (0.183) et à 551 m2/m3 (0.122), ce qui donne :

$$0.183 - [\,(0.183 - 0.122) * (500 - 367) / (551 - 367)\,] = 0.139$$

h/H inférieur ou égal à 0.139

Tableau 1

| | Diamètre inerte (pouce) | Diamètre inerte (mm) | A inerte $m^2/m^3$ | h/H |
|---|---|---|---|---|
| | bille 1/8" | 3,2 | 1102 | 0.061 |
| | bille 1/4" | 6,4 | 551 | 0.122 |
| | bille 3/8" | 9,5 | 367 | 0.183 |
| | bille 1/2" | 12,7 | 276 | 0.244 |
| | bille 3/4" | 19,1 | 184 | 0.366 |
| | | | | |
| | selle 1/2" | | 620 | 0.109 |
| | selle 3/4" | | 330 | 0.204 |
| | selle 1" | | 260 | 0.259 |

*variation des inertes*

On aurait également pu ajouter dans le tableau des billes de diamètre supérieur à 1 pouce ; toutefois, l'homme de l'art comprendra aisément que cela entrainera la sélection d'une hauteur de lit maximal (optimal) d'inertes qui prend énormément de place dans la colonne de déshydratation et limite par ce fait le volume disponible pour les agents déshydratants actifs ; ce qui ne correspond donc pas à un mode optimal pour l'homme du métier.

Dans cette optique, on préférera utiliser des matériaux inertes

- dont la surface spécifique Ab est comprise entre 250 et 650 m2/m3, et/ou
- dont les dimensions sont inférieures à 1 pouce.

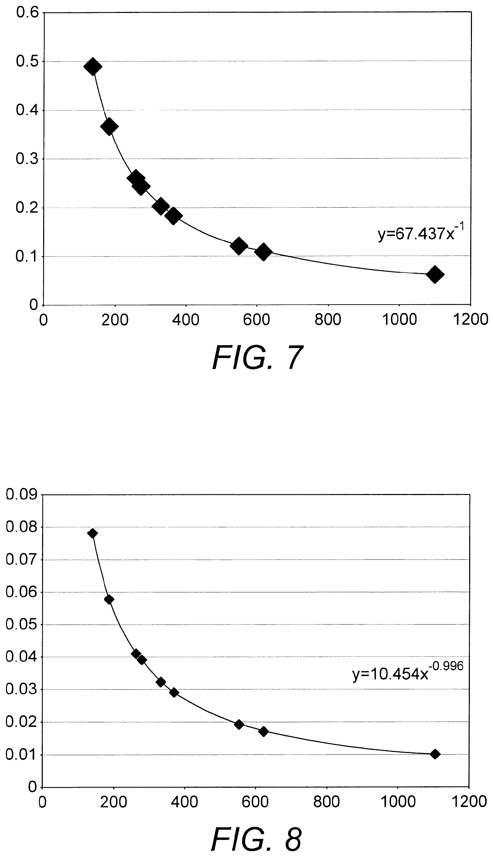

La figure 7 illustre donc les valeurs préférentielles maximales des rapports de hauteur entre le lit inerte et le lit d'agents déliquescents selon la présente invention en fonction des surfaces spécifiques de matériau d'inerte précitées. On peut y apercevoir le rapport h/H en ordonnée et les valeurs de surfaces spécifiques de matériau d'inerte en abscisse. Ainsi, selon un mode d'exécution préféré de la présente invention, le rapport entre la hauteur du lit de matériau inerte et la hauteur initiale du lit d'agents déshydratants est inférieur à 67,5/Ab avec Ab exprimé en m2/m3.

L'utilisation de ratios h/H supérieurs aux valeurs maximales revendiquées ne fait donc pas partie de la présente invention.

La présence obligatoire d'un lit de matériau inerte selon la présente invention implique donc qu'il existe bien un ratio h/H supérieur à zéro, par exemple h/H est supérieur ou égal à 0,01, de préférence supérieur à 0,015.

Ainsi, dans un mode préféré d'exécution de la présente invention, le rapport h/H est supérieur ou égal aux valeurs indiquées dans le tableau 2 ci-dessous en fonction de la surface spécifique et du type de matériau inerte. Il sera ensuite très facile pour l'homme de l'art de définir des valeurs optimales minimales de h/H grâce à ce tableau.

Par exemple, pour un matériau inerte de surface spécifique de 500 m2/m3 (Ab), on effectue une règle de trois autour des valeurs les plus proches, à savoir celles correspondant respectivement à 367 m2/m3 (0.029) et à 551 m2/m3 (0.019), ce qui donne :

$$0.029 - [\,(0.029 - 0.019) * (500 - 367) / (551 - 367)\,] = 0.022$$

h/H supérieur ou égal à 0.022

Tableau 2

| | Diamètre | Diamètre | A inerte | h/H |
|---|---|---|---|---|
| | inerte (pouce) | inerte (mm) | $m^2/m^3$ | |
| variation des inertes | bille 1/8" | 3,2 | 1102 | 0.010 |
| | bille 1/4" | 6,4 | 551 | 0.019 |
| | bille 3/8" | 9,5 | 367 | 0.029 |
| | bille 1/2" | 12,7 | 276 | 0.039 |
| | bille 3/4" | 19,1 | 184 | 0.058 |
| | | | | |
| | selle 1/2" | | 620 | 0.017 |
| | selle 3/4" | | 330 | 0.032 |
| | selle 1" | | 260 | 0.041 |

La figure 8 illustre donc les valeurs préférentielles minimales des rapports de hauteur entre le lit inerte et le lit d'agents déliquescents selon la présente invention en fonction des surfaces spécifiques de matériau d'inerte précitées. On peut y apercevoir le rapport h/H en ordonnée et les valeurs de surfaces spécifiques de matériau d'inerte en abscisse. Ainsi, selon un mode d'exécution préféré de la présente invention, le rapport entre la hauteur du lit de matériau inerte et la hauteur initiale du lit d'agents déshydratants est supérieur à 10,4/Ab avec Ab exprimé en m2/m3.

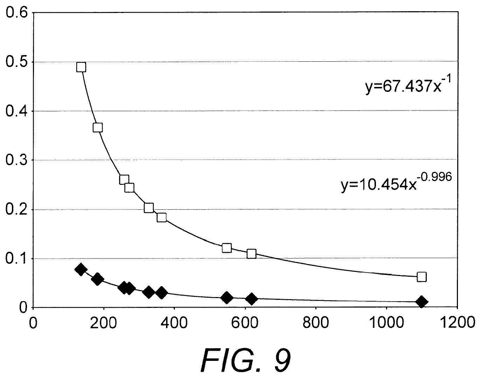

Enfin, la figure 9 illustre les gammes de valeurs préférentielles des rapports de hauteur entre le lit inerte et le lit d'agents déliquescents selon la présente invention en fonction des surfaces spécifiques de matériau d'inerte précitées. On peut y apercevoir le rapport h/H en ordonnée et les valeurs de surfaces spécifiques de matériau d'inerte en abscisse. Ainsi, selon un mode d'exécution préféré de la présente invention, le rapport entre la hauteur du lit de matériau inerte et la hauteur initiale du lit d'agents déshydratants est supérieur à 10,4/Ab et inférieur à 67,5/Ab avec Ab exprimé en m2/m3.

La présente invention n'est pas limitée à l'utilisation de matériau inerte de taille unique. On pourrait très bien utiliser des matériaux inertes de tailles différentes. Ainsi, selon un mode d'exécution de la présente invention on utilise un lit d'inerte constitué d'au moins deux familles de matériau inerte de taille différente. Par exemple, ce choix se fera parmi les matériaux inertes susmentionnés. Par exemple, le lit de matériau inerte sera constitué d'au moins deux couches, avec de préférence une couche inférieure présentant une surface spécifique inférieure à la couche supérieure ; ainsi, la présence de matériau inerte de taille supérieure évitera le passage au travers de la grille de support tout en permettant l'utilisation de matériaux de petite taille.

La présente invention concerne également un procédé de démarrage d'un procédé de déshydratation d'un effluent liquide et/ou gazeux qui est introduit à contre-gravité au travers d'une colonne de séchage comprenant un lit de séchage constitué d'agents déshydratants déliquescents caractérisé en ce que les agents déshydratants déliquescents sont initialement constitués d'un mélange d'au moins deux familles de poids différent, les dits agents déshydratants ayant un poids compris entre 3 et 40g.

Pour la présente invention et les revendications ci-après, on entend de préférence par « deux familles de poids différent d'agents déshydratants » le fait qu'au moins une des familles soit constituée d'agents déshydratants ayant un poids au moins 30% inférieur au poids d'une autre famille.

Par exemple, le lit initial d'agents déshydratants déliquescents sera constitué d'au moins deux couches, avec de préférence une couche inférieure présentant une surface spécifique inférieure à la couche supérieure. Un mélange d'au moins deux familles de poids différent d'agents déshydratants peut donc signifier des couches distinctes et/ou un mélange homogène ou aléatoire.

La présente invention utilise donc des agents déshydratants déliquescents qui ont initialement un poids compris entre 3 et 40g, de préférence entre 5 et 40g. De préférence, on utilise des produits commercialisés par la société Newton's (France) sous la forme de grains de chlorure de calcium (CaCl2), de soude (NaOH) ou de potasse (KOH). Bien que les formes des agents déshydratants déliquescents puissent être diverses (sphères, etc...), on utilise de préférence selon la présente invention des agents déshydratants déliquescents sous formes particulières en coussinets car on a constaté que ce type de forme présente un comportement optimum des agents au fur et à mesure de leur consommation. La forme particulière en coussinet permet d'éviter la prise en masse du lit, la formation de chemins préférentiels et limite les pertes de charges pendant l'utilisation. La forme en coussinet a une surface spécifique propre plus grande que celle d'une perle de même poids ou de même volume, tout en limitant les pertes de surfaces liées aux contacts entre grains comme c'est le cas avec des formes en écailles. Elle est un optimum de la surface spécifique réellement disponible. La forme en coussinets permet également le réarrangement du lit au fur et à mesure que celui-ci est consommé. Il y a une diminution progressive de la hauteur du lit jusqu'à atteindre la hauteur minimum de lit requise par le procédé de déshydratation.

Les gammes de caractéristiques préférentielles des agents déshydratants déliquescents qui sont avantageusement utilisés dans la présente invention sont reprises dans les tableaux ci-après :

| Coussinet de soude (NaOH) - poids (g) | Température de fusion (C) | Solubilité dans l'eau a 20 C (g/l) | Taille (mm) Longueur largeur Hauteur | Volume (cm3) | Surface (cm2) | Aire spécifique par unité de volume (m2/m3) | Densité apparente (kg/m3) |
|---|---|---|---|---|---|---|---|
| 9.5-11.5 | 310-326 | 1000-1200 | 29-31 26-27 14-15 | 5-7 | 16-19 | 135-165 | 850-1050 |
| 25-31 | 310-326 | 1000-1200 | 36-40 33-37 17-21 | 13-17 | 30-38 | 100-140 | 950-1150 |

| Coussinet de potasse (KOH) - poids (g) | Température de fusion (C) | Solubilité dans l'eau a 20C (g/l) | Taille (mm) Longueur largeur Hauteur | Volume (cm3) | Surface (cm2) | Aire spécifique par unité de volume (m2/m3) | Densité apparente (kg/m3) |
|---|---|---|---|---|---|---|---|
| 9.5-11.5 | 350-370 | 700-840 | 29-31 26-27 14-15 | 5-7 | 16-19 | 135-165 | 850-1050 |
| 25-31 | 350-370 | 700-840 | 36-40 33-37 17-21 | 13-17 | 30-38 | 100-140 | 950-1150 |

| Coussinet de chlorure de calcium (CaCl2) - poids (g) | Température de fusion (C) | Solubilité dans l'eau a 20 C (g/l) | Taille (mm) Longueur largeur Hauteur | Volume (cm3) | Surface (cm2) | Aire spécifique par unité de volume (m2/m3) | Densité apparente (kg/m3) |
|---|---|---|---|---|---|---|---|
| 9.5-11.5 | 700-840 | 680-800 | 29-31 26-27 14-15 | 5-7 | 16-19 | 135-165 | 850-1050 |

La présente invention concerne donc également un mélange d'agents déshydratants déliquescents pour la déshydratation d'effluent liquide et/ou gazeux caractérisé en ce que le dit mélange est constitué d'un mélange d'au moins deux familles d'agents déshydratants déliquescents de poids différents, les dits agents déliquescents ayant un poids compris entre 3 et 40g.

Ainsi, la présente invention concerne un procédé de démarrage d'un procédé de déshydratation d'un effluent liquide et/ou gazeux qui est introduit à contre-gravité au travers d'une colonne de séchage comprenant un lit de séchage de hauteur initiale (H+h) constitué dans sa partie inférieure d'un lit de matériau inerte de hauteur h et dans sa partie supérieure d'un lit d'agents déshydratants déliquescents de hauteur initiale H, les dits agents déshydratants déliquescents ayant un poids initial compris entre 3 et 40g, caractérisé en ce que

- le rapport h/H est inférieur à 0,49, et
- les agents déshydratants déliquescents sont initialement constitués d'un mélange d'au moins deux familles d'agents déshydratants déliquescents de poids différents.

La présente invention concerne également une installation de déshydratation d'un effluent liquide ou gazeux, comportant des moyens de déshydratation de l'effluent neutralisé comportant un lit de séchage et des moyens de collecte de la saumure résultant de la déshydratation, le lit de séchage étant constitué dans sa partie inférieure d'un lit de matériau inerte de hauteur h et dans sa partie supérieure d'un lit d'agents déshydratants déliquescents de hauteur initiale H caractérisé en ce que

- les agents déshydratants déliquescents ont initialement un poids compris entre 3 et 40g, et sont de préférence constitués d'un mélange d'au moins deux familles d'agents déshydratants déliquescents de poids différents, et
- le rapport h/H est inférieur à 0,49.

Selon un mode d'application de la présente invention, on peut également envisager des utilisations ultérieures de la saumure sortant en fond de colonne. On citera à titre d'exemple l'utilisation de la saumure comme moyen de neutralisation préalable de l'effluent tel que décrit dans la demande de brevet WO2012010754.

L'installation de déshydratation d'un effluent liquide ou gazeux selon la présente invention est donc de préférence une colonne de déshydratation de forme cylindrique. La hauteur de colonnes industrielles de ce type est de préférence comprise entre 4 et 15 mètres, par exemple entre 5 et 10 mètres. Son diamètre est de préférence compris entre 1 et 6 mètres, par exemple entre 3,5 et 6 mètres. La présence d'une grille de support du lit de séchage comme représentée schématiquement sur la figure 1 est préférée.

Dans un mode préféré d'exécution de la présente invention, l'installation de déshydratation comprend également un distributeur qui permet de distribuer l'effluent liquide ou gazeux dans le fonds de l'installation, de préférence sous la grille de distribution. De préférence, l'orientation de la distribution de l'effluent liquide ou gazeux est telle qu'elle ne soit pas directement dirigée vers le lit et/ou la grille de support ; par exemple, une distribution séparée placée dans la colonne sous la grille support et intégrant une orientation des jets de l'effluent liquide ou gazeux vers le fonds de la colonne présente un avantage additionnel car cela permet de séparer l'eau libre pouvant être contenue dans l'effluent liquide ou gazeux.

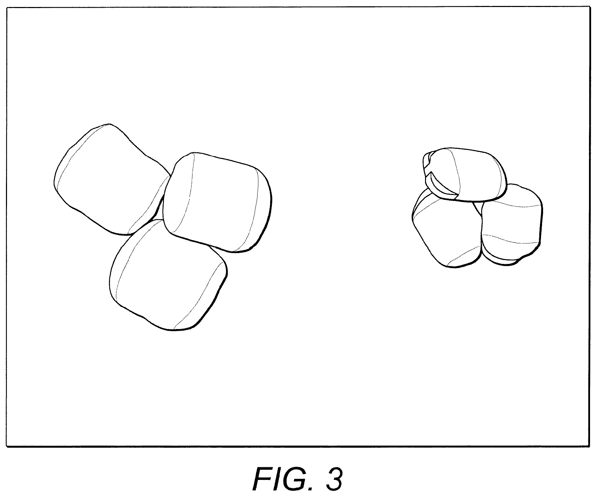

La figure 3 représente donc très précisément la morphologie préférée des agents déliquescents pouvant être utilisés dans le cadre de la présente invention. Le terme « coussinet » est particulièrement approprié et représentatif de la morphologie préférée des dits agents déliquescents. D'autres termes représentatifs des coussinets sont parfois utilisés tels que galets, oreillers, noix ou boulets de charbon. On pourra aussi caractériser cette morphologie préférée par le qualificatif oblong.

La Demanderesse a découvert de manière inattendue qu'une amélioration sensible de son procédé de séchage pouvait être réalisée grâce à la présente invention, à savoir une optimisation de la hauteur de la couche de matériau inerte susmentionnée et/ou l'optimisation de mélange d'agents déliquescents. La Demanderesse pensait initialement qu'il fallait maximiser la couche de matériau inerte pour que l'effet de déshydratation de la saumure soit maximal ; hors, on a constaté que cette efficacité atteint rapidement un pallier - quoique ne voulant pas être restreint par cette explication, la Demanderesse pense que cette optimisation est intrinsèquement liée à la morphologie des matériaux inertes en combinaison avec la morphologie et le type d'agents déliquescents utilisés. Ces développements ont ainsi permis de définir une hauteur initiale H minimale du lit d'agents déshydratants déliquescents en fonction de la hauteur initiale de la couche de matériau inerte. Il est donc évident pour l'homme de l'art que le procédé et l'installation décrits et revendiqués dans la présente invention concernent en particulier toutes les phases de démarrage du procédé, à savoir, à la première utilisation ainsi que lors de chaque remplissage de l'installation avec les agents déshydratants déliquescents.

La présente invention n'est pas limitée par la teneur en eau initiale de l'effluent à déshydrater ; toutefois, selon un mode particulier de la présente invention, l'effluent à déshydrater contient initialement moins de 1000 ppm d'eau, ou même moins de 600 ppm d'eau. C'est effectivement dans ces gammes de concentration en eau que le procédé selon la présente invention sera le plus attractif d'un point de vue à la fois technique et commercial. Par exemple, l'effluent à déshydrater contient initialement entre 180 et 320 ppm d'eau.

La présente invention permet de réduire la dite concentration en eau de plus de 50%, et même de plus de 75%. Par exemple, l'effluent déshydraté contient moins de 50ppm ou même moins de 20 ppm d'eau.

Bien qu'il n'y ait pas de réelle limitation, la présente invention convient particulièrement à des débits d'effluent à déshydrater supérieurs à 10 m3/h, supérieurs à 50 m3/h, ou même supérieurs à 100 m3/h. Bien qu'il n'y ait pas de réelle limitation, la présente invention convient particulièrement à des débits d'effluent à déshydrater inférieurs à 500 m3/h, ou même inférieurs à 400 m3/h.

Bien qu'il n'y ait pas de réelle limitation, la présente invention convient particulièrement à des valeurs de vitesses en fut vide (m/s) du gaz/liquide « u » supérieurs ou égaux à 2.10-4 m/s (0,2 mm/s), ou même supérieurs ou égaux à 1.10-3 m/s (1 mm/s). Bien qu'il n'y ait pas de réelle limitation, la présente invention convient particulièrement à des valeurs de vitesses en fut vide (m/s) du gaz/liquide « u » inférieurs ou égaux à 5.10-3 m/s (5 mm/s), ou même inférieurs ou égaux à 4.10-3 m/s (4 mm/s).

Les effluents susceptibles de pouvoir bénéficier du procédé de séchage selon la présente invention seront en particulier ceux utilisés couramment en raffinerie. On citera à titre d'exemple les effluents GPL, essence, gasoil, kérosène, solvants (par exemple le tétrahydrofurane-THF, le dichlorométhane-DCM ou le mono-chlorure de vinyle-VCM), les gaz naturels (méthane, éthane, propane, butane, GNL). L'application du procédé revendiqué au gasoil et au kérosène s'est révélé particulièrement efficace et nettement plus attractif d'un point de vue à la fois technique et commercial que, par exemple, le séchage sous vide.

La présente invention sera à présent illustrée au moyen des exemples de réalisation et tableaux et figures qui suivent. Ces données ont été calculées grâce aux modèles développés au travers de l'expérience accumulée par la Demanderesse dans le domaine. Ces exemples démontrent les avantages liés à la présente invention, à savoir une économie en agent déliquescent et/ou une augmentation des performances globales du procédé de déshydratation.

Tous les exemples ont été réalisés au moyen de billes d'inerte de diamètre d' 1/4 de pouce (6.4 mm), soit une aire spécifique de 551 m2/m3.

Les conditions opératoires de départ étaient les suivantes :

- Effluent = gasoil (température de 40C)
- Débit = 200 m3/h
- Coussinets de soude (NaOH) constitues de 40% en poids du premier type de coussinets définis dans le tableau ci-dessus et de 60% en poids du deuxième type de coussinets définis dans le tableau ci-dessus Concentration initiale en eau Co = 500 ppm
- Diamètre de la colonne de séchage = 4,8 m

Le 1er exemple consiste à déterminer la hauteur maximale optimale du lit de matériau inerte pour une hauteur de lit total constante, à savoir 5 mètres (H+h).

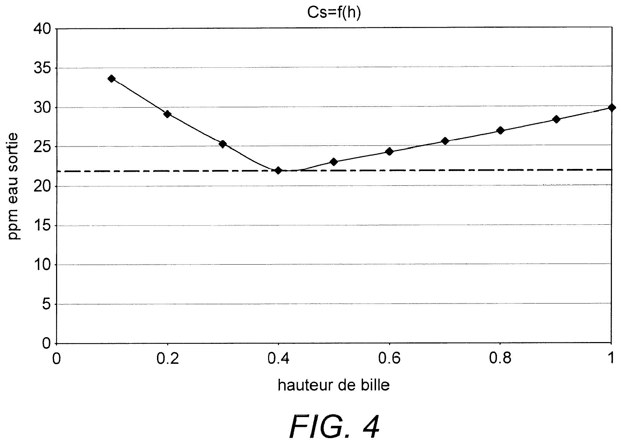

Les résultats sont indiqués dans le tableau ci-dessous et également représentés schématiquement dans la figure 4.

| h (m) | H (m) | Cb ppm | Cs ppm | h/H |
|-------|-------|--------|--------|------|
| 0 | 5 | 500 | 39 | 0.00 |
| 0.1 | 4.9 | 412 | 34 | 0.02 |
| 0.2 | 4.8 | 339 | 29 | 0.04 |
| 0.3 | 4.7 | 279 | 25 | 0.06 |
| 0.4 | 4.6 | 230 | 22 | 0.09 |
| 0.5 | 4.5 | 230 | 23 | 0.11 |
| 0.6 | 4.4 | 230 | 24 | 0.14 |
| 0.7 | 4.3 | 230 | 26 | 0.16 |
| 0.8 | 4.2 | 230 | 27 | 0.19 |
| 0.9 | 4.1 | 230 | 28 | 0.22 |
| 1 | 4.0 | 230 | 30 | 0.25 |

On peut donc conclure que toute augmentation de la hauteur d'inerte au-delà de 0,5 m (soit un ratio h/H de 0,11) a un impact négatif sur l'efficacité du procédé.

Le deuxième exemple consiste à évaluer l'impact de la vitesse « u » sur la hauteur maximale optimale h et sur le ratio h/H, H étant fixé à 5m.

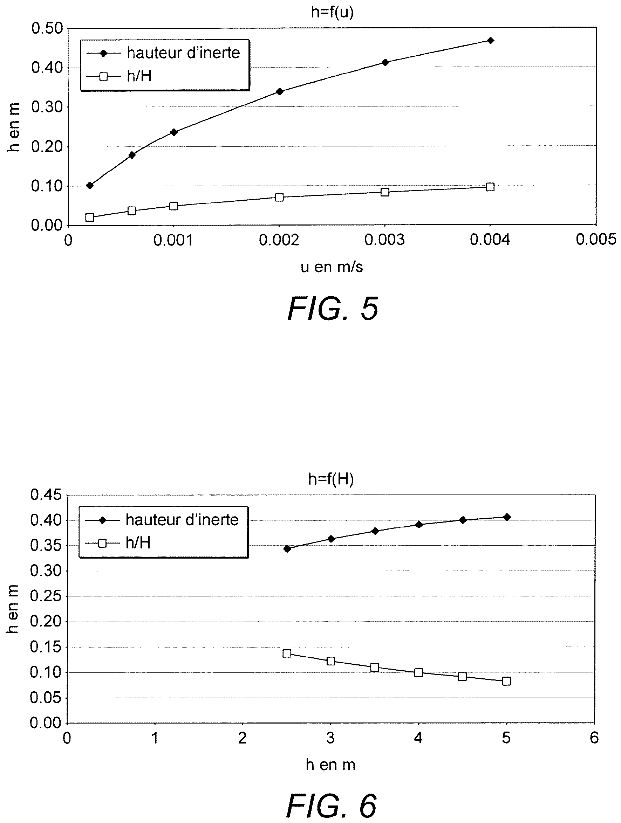

Les résultats sont indiqués dans le tableau ci-dessous et également représentés schématiquement dans la figure 5.

|  | inerte | A inerte | u (m/s) | h (m) | h/H |
|---|---|---|---|---|---|
| variation de vitesse | bille1/4" | 551 | 0.004 | 0.47 | 0.093 |
| | bille1/4" | 551 | 0.003 | 0.41 | 0.082 |
| | bille1/4" | 551 | 0.002 | 0.34 | 0.067 |
| | bille1/4" | 551 | 0.001 | 0.23 | 0.047 |
| | bille1/4" | 551 | 0.0006 | 0.18 | 0.036 |
| | bille1/4" | 551 | 0.0002 | 0.10 | 0.019 |

Le troisième exemple consiste à évaluer l'impact de la hauteur h+H sur la hauteur maximale optimale h et donc le ratio h/H, u étant fixé à 3 mm/s.

Les résultats sont indiqués dans le tableau ci-dessous et également représentés schématiquement dans la figure 6.

|  | inerte | A inerte | H (m) | h (m) | h/H |
|---|---|---|---|---|---|
| variation de H | bille1/4" | 551 | 5 | 0.41 | 0.082 |
| | bille1/4" | 551 | 4.5 | 0.40 | 0.089 |
| | bille1/4" | 551 | 4 | 0.39 | 0.098 |
| | bille1/4" | 551 | 3.5 | 0.38 | 0.109 |
| | bille1/4" | 551 | 3 | 0.37 | 0.122 |
| | bille1/4" | 551 | 2.5 | 0.34 | 0.138 |

**Revendications**

1. Procédé de démarrage d'un procédé de déshydratation d'un effluent liquide et/ou gazeux, le dit démarrage consistant en la première utilisation ou lors de chaque remplissage d'une colonne de séchage, le dit effluent étant sélectionné parmi les GPL, essence, gasoil, kérosène, solvants (par exemple THF, le DCM ou la TEA), et les gaz naturels (propane, butane, GNL), qui est introduit à contre-gravité au travers de la colonne de séchage comprenant un lit de séchage de hauteur initiale (H+h) constitué dans sa partie inférieure d'un lit de matériau inerte de hauteur h et dans sa partie supérieure d'un lit d'agents déshydratants déliquescents de hauteur initiale H, les dits agents déshydratants déliquescents ayant un poids initial compris entre 3 et 40g et étant choisis parmi le chlorure de calcium ($CaCl_2$), la soude (NaOH) et/ou la potasse (KOH), **caractérisé en ce que** le rapport h/H est inférieur à 0,49 et supérieur ou égal à 0,01 ; et **en ce que** la surface spécifique du lit de matériau d'inerte par mètre cube de lit est comprise entre 250 et 650 $m^2/m^3$.

2. Procédé selon la revendication précédente **caractérisé en ce que** le rapport h/H est égal ou inférieur aux valeurs indiquées dans le tableau ci-dessous en fonction de la surface spécifique et du type de matériau inerte indiqués dans le tableau ci-dessous

| variation des inertes | Diamètre inerte (pouce) | Diamètre inerte (mm) | A inerte $m^2/m^3$ | h/H |
|---|---|---|---|---|
| | bille 1/8" | 3,2 | 1102 | 0.061 |
| | bille1/4" | 6,4 | 551 | 0.122 |
| | bille 3/8" | 9,5 | 367 | 0.183 |
| | bille 1/2" | 12,7 | 276 | 0.244 |
| | bille 3/4" | 19,1 | 184 | 0.366 |
| | | | | |
| | selle 1/2" | | 620 | 0.109 |
| | selle 3/4" | | 330 | 0.204 |
| | selle 1" | | 260 | 0.259 |

**3.** Procédé selon l'une quelconque des revendications précédentes **caractérisé en ce que** le rapport h/H est égal ou supérieur aux valeurs indiquées dans le tableau ci-dessous en fonction de la surface spécifique et du type de matériau inerte indiqués dans le tableau ci-dessous

| variation des inertes | Diamètre inerte (pouce) | Diamètre inerte (mm) | A inerte $m^2/m^3$ | h/H |
|---|---|---|---|---|
| | bille 1/8" | 3,2 | 1102 | 0.010 |
| | bille1/4" | 6,4 | 551 | 0.019 |
| | bille 3/8" | 9,5 | 367 | 0.029 |
| | bille 1/2" | 12,7 | 276 | 0.039 |
| | bille 3/4" | 19,1 | 184 | 0.058 |
| | | | | |
| | selle 1/2" | | 620 | 0.017 |
| | selle 3/4" | | 330 | 0.032 |
| | selle 1" | | 260 | 0.041 |

**4.** Procédé selon l'une quelconque des revendications précédentes **caractérisé en ce que** les agents déshydratants déliquescents sont initialement constitués d'un mélange d'au moins deux familles de poids différent, avec de préférence au moins une des familles constituée d'agents déshydratants ayant un poids au moins 30% inférieur au poids d'une autre famille.

**5.** Procédé selon l'une quelconque des revendications précédentes **caractérisé en ce que** les agents déshydratants déliquescents ont une forme initiale oblong, de préférence une forme de coussinet.

**6.** Procédé selon l'une quelconque des revendications précédentes **caractérisé en ce que** l'effluent est sélectionné parmi le gasoil et/ou le kérosène.

**7.** Procédé selon l'une quelconque des revendications précédentes **caractérisé en ce que** le matériau inerte est constitué de billes sphériques de diamètre compris entre 5 et 30 mm.

**Patentansprüche**

**1.** Verfahren zum Inbetriebnehmen eines Entwässerungsverfahrens für einen flüssigen und/oder gasförmigen Abstrom, wobei das Inbetriebnehmen aus der ersten Verwendung oder bei jeder Befüllung einer Trocknungskolonne besteht, wobei der Abstrom aus LPG, Ottokraftstoff, Dieselkraftstoff, Kerosin, Lösungsmitteln (zum Beispiel THF, DCM oder TEA) und Erdgasen (Propan, Butan, LNG) ausgewählt ist und gegen die Schwerkraft durch die Trocknungskolonne hindurch eingebracht wird, die ein Trocknungsbett der Anfangshöhe (H+h) umfasst, das in seinem unteren Teil aus einem Bett von Inertmaterial der Höhe h und in seinem oberen Teil aus einem Bett von hygroskopischen Trocknungsmitteln der Anfangshöhe H besteht, wobei die hygroskopischen Trocknungsmittel ein Anfangsgewicht zwischen 3 und 40 g aufweisen und aus Calciumchlorid ($CaCl_2$), Natriumhydroxid (NaOH) und/oder Kaliumhydroxid (KOH) ausgewählt sind, **dadurch gekennzeichnet, dass** das Verhältnis h/H kleiner als 0,49 und größer als oder gleich 0,01 ist, und dadurch, dass die spezifische Oberfläche des Betts von Inertmaterial pro Kubikmeter Bett zwischen 250 und 650 $m^2/m^3$ beträgt.

2.  Verfahren nach dem vorhergehenden Anspruch, **dadurch gekennzeichnet, dass** das Verhältnis h/H gleich oder kleiner als die in der nachstehenden Tabelle angegebenen Werte in Abhängigkeit von der spezifischen Oberfläche und dem Typ des Inertmaterials, wie in der nachstehenden Tabelle angegeben, ist

|  | Durchmesser Inert (Inch) | Durchmesser Inert (mm) | A Inert $m^2/m^3$ | h/H |
|---|---|---|---|---|
| Variation der Inertmaterialien | Kugel 1/8" | 3,2 | 1102 | 0,061 |
| | Kugel 1/4" | 6,4 | 551 | 0,122 |
| | Kugel 3/8" | 9,5 | 367 | 0,183 |
| | Kugel 1/2" | 12,7 | 276 | 0,244 |
| | Kugel 3/4" | 19,1 | 184 | 0,366 |
| | | | | |
| | Sattel 1/2" | | 620 | 0,109 |
| | Sattel 3/4" | | 330 | 0,204 |
| | Sattel 1" | | 260 | 0,259 |

3.  Verfahren nach einem der vorhergehenden Ansprüche, **dadurch gekennzeichnet, dass** das Verhältnis h/H gleich oder größer als die in der nachstehenden Tabelle angegebenen Werte in Abhängigkeit von der spezifischen Oberfläche und dem Typ des Inertmaterials, wie in der nachstehenden Tabelle angegeben, ist

|  | Durchmesser Inert (Inch) | Durchmesser Inert (mm) | A Inert $m^2/m^3$ | h/H |
|---|---|---|---|---|
| Variation der Inertmaterialien | Kugel 1/8" | 3,2 | 1102 | 0,010 |
| | Kugel 1/4" | 6,4 | 551 | 0,019 |
| | Kugel 3/8" | 9,5 | 367 | 0,029 |
| | Kugel 1/2" | 12,7 | 276 | 0,039 |
| | Kugel 3/4" | 19,1 | 184 | 0,058 |
| | | | | |
| | Sattel 1/2" | | 620 | 0,017 |
| | Sattel 3/4" | | 330 | 0,032 |
| | Sattel 1" | | 260 | 0,041 |

4.  Verfahren nach einem der vorhergehenden Ansprüche, **dadurch gekennzeichnet, dass** die hygroskopischen Trocknungsmittel zu Beginn aus einem Gemisch von mindestens zwei Familien mit unterschiedlichem Gewicht bestehen, wobei vorzugsweise mindestens eine der Familien aus Trocknungsmitteln besteht mit einem Gewicht, das mindestens 30% niedriger ist als das Gewicht der anderen Familie.

5. Verfahren nach einem der vorhergehenden Ansprüche, **dadurch gekennzeichnet, dass** die hygroskopischen Trocknungsmittel eine längliche Anfangsform, vorzugsweise eine Kissenform, besitzen.

6. Verfahren nach einem der vorhergehenden Ansprüche, **dadurch gekennzeichnet, dass** der Abstrom aus Dieselkraftstoff und/oder Kerosin ausgewählt ist.

7. Verfahren nach einem der vorhergehenden Ansprüche, **dadurch gekennzeichnet, dass** das Inertmaterial aus sphärischen Kugeln mit einem Durchmesser zwischen 5 und 30 mm besteht.

**Claims**

1. Startup method for a method for dehydrating a liquid and/or gaseous effluent, said startup consisting of the first use or at the time of each filling of a drying column, said effluent being selected from LPG, petrol, diesel, kerosene, solvents (for example THF, DCM or TEA), and natural gases (propane, butane, LNG), which is introduced against gravity through the drying column comprising a drying bed of initial height (H+h) formed in its lower part from a bed of inert material of height h and in its upper part by a bed of deliquescent dehydrating agents of initial height H, said deliquescent dehydrating agents having an initial weight of between 3 and 40 g and being chosen from calcium chloride ($CaCl_2$), sodium hydroxide (NaOH) and/or potassium hydroxide (KOH), **characterized in that** the ratio h/H is less than 0.49 and greater than or equal to 0.01; and **in that** the specific surface area of the bed of inert material per cubic metre of bed is between 250 and 650 $m^2/m^3$.

2. Method according to the preceding claim, **characterized in that** the ratio h/H is equal to or less than the values indicated in the table below as a function of the specific surface area and of the type of inert material indicated in the table below

| | Diameter inert (inches) | Diameter inert (mm) | A inert $m^2/m^3$ | h/H |
|---|---|---|---|---|
| | bead 1/8″ | 3.2 | 1102 | 0.061 |
| | bead 1/4″ | 6.4 | 551 | 0.122 |
| | bead 3/8″ | 9.5 | 367 | 0.183 |
| Variation of the inerts | bead 1/2″ | 12.7 | 276 | 0.244 |
| | bead 3/4″ | 19.1 | 184 | 0.366 |
| | | | | |
| | saddle 1/2″ | | 620 | 0.109 |
| | saddle 3/4″ | | 330 | 0.204 |
| | saddle 1″ | | 260 | 0.259 |

3. Method according to either one of the preceding claims, **characterized in that** the ratio h/H is equal to or greater than the values indicated in the table below as a function of the specific surface area and of the type of inert material indicated in the table below

| Variation of the inerts | Diameter | Diameter | A inert | h/H |
|---|---|---|---|---|
| | inert (inches) | inert (mm) | $m^2/m^3$ | |
| | bead 1/8″ | 3.2 | 1102 | 0.010 |
| | bead 1/4″ | 6.4 | 551 | 0.019 |
| | bead 3/8″ | 9.5 | 367 | 0.029 |
| | bead 1/2″ | 12.7 | 276 | 0.039 |
| | bead 3/4″ | 19.1 | 184 | 0.058 |
| | | | | |
| | saddle 1/2″ | | 620 | 0.017 |
| | saddle 3/4″ | | 330 | 0.032 |
| | saddle 1″ | | 260 | 0.041 |

4. Method according to any one of the preceding claims, **characterized in that** the deliquescent dehydrating agents are initially formed from a mixture of at least two families of different weight, with preferably at least one of the families formed of dehydrating agents having a weight at least 30% lower than the weight of another family.

5. Method according to any one of the preceding claims, **characterized in that** the deliquescent dehydrating agents have an oblong initial shape, preferably a cushion shape.

6. Method according to any one of the preceding claims, **characterized in that** the effluent is selected from diesel and/or kerosene.

7. Method according to any one of the preceding claims, **characterized in that** the inert material is formed of spherical beads having a diameter of between 5 and 30 mm.

FIG. 1

Solvent déshydraté

H2 - Agent déshydratant

Formation de saumure
et écoulement

H1 - billes en céramique

Solvant entrant

Saumure

*FIG. 2*

FIG. 3

Cs=f(h)

FIG. 4

*FIG. 5*

*FIG. 6*

$y=67.437x^{-1}$

FIG. 7

$y=10.454x^{-0.996}$

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3246453 A
- EP 171578 A
- WO 2012010754 A

**Littérature non-brevet citée dans la description**

- **F. AUGIER ; C. BOYER ; M. VASSIEU.** Liquid Drying by Solid Desiccant Materials: Expérimental Study and Design Method. *O & Gas Science and Technology - Rev. IFP,* 2008, vol. 63 (6), 713-722
- **BARNETT J W.** *Oil and Gas Journal,* 15 Avril 1996, vol. 94 (16), 68-70